# EUROPÄISCHE PATENTSCHRIFT

(11) **EP 2 155 593 B1**
(45) Veröffentlichungstag und Bekanntmachung des Hinweises auf die Patenterteilung: **28.01.2015**
(21) Anmeldenummer: 08714753.4
(22) Anmeldetag: 11.03.2008
(51) Int. Cl.: B65H 29/00

(54) **VERFAHREN ZUM ÜBERWACHEN UND/ODER STEUERN EINER TRANSPORTVORRICHTUNG, SOWIE TRANSPORTVORRICHTUNG ZUR DURCHFÜHRUNG DES VERFAHRENS**
METHOD FOR MONITORING AND/OR CONTROLLING A TRANSPORT DEVICE, AND TRANSPORT DEVICE FOR CARRYING OUT SAID METHOD
PROCÉDÉ POUR SURVEILLER ET/OU COMMANDER UN DISPOSITIF DE TRANSPORT, AINSI QUE DISPOSITIF DE TRANSPORT POUR L'EXÉCUTION DE CE PROCÉDÉ

(30) Priorität: 29.05.2007 CH 853072007
(43) Veröffentlichungstag der Anmeldung: 24.02.2010
(73) Patentinhaber: Ferag AG, 8340 Hinwil (CH)
(72) Erfinder: MÄDER, Carl, Conrad, CH-8335 Hittnau ZH (CH)
(74) Vertreter: Rentsch Partner AG
(86) Internationale Anmeldenummer: PCT/CH2008/000103
(87) Internationale Veröffentlichungsnummer: WO 2008/144945

(56) Entgegenhaltungen:
- WO-A-2005/107948
- WO-A-2006/063125

## Beschreibung

### FELD DER ERFINDUNG

Die vorliegende Erfindung bezieht sich auf das Gebiet der Fördertechnik. Sie betrifft ein Verfahren zum Überwachen und/oder Steuern einer Transportvorrichtung gemäss dem Oberbegriff des Anspruchs 1, sowie eine Transportvorrichtung zur Durchführung des Verfahrens gemäss Anspruch 12.

### HINTERGRUND DER ERFINDUNG

Bei der Herstellung von Druckerzeugnissen wie Zeitungen, Zeitschriften, Katalogen, Prospekten oder dgl., die schnell und in hohen Stückzahlen bereitgestellt werden müssen, haben sich in der Vergangenheit spezielle Techniken der Be- und Verarbeitung und des Transports zwischen den einzelnen Be- und Verarbeitungsstationen ausgebildet und etabliert, die sich insbesondere durch die hohen erreichbaren Leistungen von 40.000 oder sogar 80.000 Druckexemplaren pro Stunde auszeichnen.

Beispiele für derartige Techniken sind aus den Druckschriften DE-A1-196 23 307, EP-A1-0 518 064, EP-A1-0 550 828, EP-A1-0 606 550, EP-A1-0 647 582, EP-A1-0 686 592, EP-A1-0 824 245, EP-B1-0 918 721, EP-0 961 188, WO-A1-2007/012206 bekannt.

Die flächigen Druckprodukte, die beispielsweise durch Falten, Falzen, Heften, Einlegen, Einstecken, Kleben, Fördern, Schneiden, Sammeln bearbeitet werden, werden meist als Schuppenstrom oder von Klammern oder Greifern einzeln gehalten, fortlaufend mit geeigneter, oft relativ hoher Geschwindigkeit zwischen den einzelnen Bearbeitungsstationen transportiert, für beispielsweise Sammeleinrichtungen zwischengespeichert, oder vereinzelt und abgezweigt.

Oft müssen komplexe und seitenstarke, das heisst dicke, Produkte gefördert werden. Die zum Fördern eingesetzten Klammern sind bei den hohen Förderleistungen, den zum Halten von dicken Produkten erforderlichen Klemmkräfte und den häufig auftretenden Schliess- und Öffnungsbewegungen extremen Belastungen ausgesetzt, so dass es gelegentlich zu Störungen kommen kann, die durch eine Fehlfunktion oder eine dauerhafte Beschädigung einer Klammer oder eines Klammerteils verursacht werden. Bei einer solchen Störung muss möglichst schnell festgestellt werden, welche Klammer oder Klammern Ursache der Störung ist (sind), um kostspielige Unterbruchszeiten möglichst kurz zu halten und eine schnell Reparatur bzw. Beseitigung der Störung zu ermöglichen.

Darüber hinaus sind die Klammern wegen ihrer hohen Belastung im Betrieb und ihrer angestrebten hohen Funktionssicherheit technologisch anspruchsvolle Produkte, die aus einer Vielzahl von genau aufeinander abgestimmten Klammerteilen zusammengesetzt sind, die in ihrem Zusammenwirken die notwendige Zuverlässigkeit der Mechanik sicherstellen. Es ist daher wünschenswert, dass im Störungsfall ein defektes Klammerteil einer Klammer durch ein Ersatzteil ersetzt wird, welches von seinen Herstellungsbedingungen her genau auf die jeweilige Klammer abgestimmt ist und den hohen Anforderungen an die mechanischen und anderen Eigenschaften genügt.

Aus dem Gebiet der Fleischverarbeitung ist es bekannt (US-B2-7, 159,772), die Laufwagen eines Transportsystems für Tierkörper mit HF-Tags auszurüsten, um eine eindeutige ein- und ausspeicherbare Zuordnung zwischen dem jeweiligen Laufwagen und dem daran hängenden Tierkörper zu erreichen. Ein vergleichbarer Vorschlag wird auch in der US-B1-6,452,497 gemacht. Aufgrund der grossen Abstände der einzelnen Laufwagen (Haken) und der wegen der Grösse und Schwere der Tierkörper geringen Transportgeschwindigkeiten kann hier ein Ein- und Auslesen der Tags ohne Probleme an einer ortsfesten Stelle vorgenommen werden.

Es ist weiterhin bekannt, Papierrollen (US-A1-2004/0102870) oder Druckproduktewickel (EP-A1-0 824 245) mit einem RFID-Element (Radio Frequency Identification) auszurüsten, um das jeweilige Produkt zu kennzeichnen und identifizierbar zu machen. Auch hier steht das transportierte Produkt im Vordergrund der Datenübertragung.

Schliesslich ist es bekannt (US-B2-7,118,029), einen Behälter für chirurgische Instrumente und den Inhalt des Behälters identifizierbar zu machen, indem sowohl am Behälter als auch an den Instrumenten selber RFID-Tags angebracht sind, die direkt oder indirekt ausgelesen werden können.

Die WO 2006/063125 offenbart ein Verfahren gem. dem Oberbegriff des Anspruchs 1. Sie zeigt eine Klammer zum lösbaren Halten eines Poststücks. Die Klammer umfasst einen maschinenlesbaren Identifikator, welcher die Klammer eindeutig identifiziert und für die Benutzung durch ein Sortiersystem bestimmt ist.

Die WO 2005/107948 zeigt einen Absorptionsträger für biologisches Material wie Speichel. Eine Haltevorrichtung ist für die Aufnahme des Absorptionsträgers und für die Verwendung in Laborgeräten eingerichtet. Um eine Beweiskette sicherzustellen, sind am Absorptionsträger und an der Haltevorrichtung Barcodes vorgesehen.

### DARSTELLUNG DER ERFINDUNG

Es ist Aufgabe der Erfindung, ein Verfahren zum Überwachen und/oder Steuern einer mit Klammern arbeitenden Transportvorrichtung sowie eine solche Transportvorrichtung anzugeben, welche die Nachteile bekannter Verfahren bzw. Vorrichtungen vermeiden und sich insbesondere durch eine hohe Funktionssicherheit, reduzierte Stillstandszeiten und eine flexible Steuerung auszeichnen und in vorhandene Systeme unter Ausnutzung der dort vorhandenen Vorrichtungen integriert werden können.

Die Aufgabe wird durch die Gesamtheit der Merkmale der Ansprüche 1 bzw. 12 gelöst. Der Kern der Erfindung, welche in den Ansprüchen definiert ist, besteht darin, an den Klammern berührungslos ein- und/oder auslesbare Tags vorzusehen, und zum Ein- und/oder Auslesen vorgegebener Datenmengen in den Tags einer Klammer eine Ein/Auslesevorrichtung in die Nähe der jeweiligen Klammer zu bringen und über einen ausgewählten Abschnitt des Transportweges mit der jeweiligen Klammer mitzubewegen. Hierdurch wird es trotz der hohen Lineargeschwindigkeiten der Klammern während des Betriebs möglich, nicht nur die Klammer eindeutig zu identifizieren, sondern auch ihre Vorgeschichte, Betriebsdaten und ihren teilweisen oder vollständigen Ausfall jederzeit festzustellen und zu dokumentieren. So kann einerseits sichergestellt werden, dass bei einer Reparatur der Klammer nach einem Ausfall die richtigen Ersatzteile eingebaut werden. Weiterhin kann bei einer Störung sofort die Klammer identifiziert werden, die den Unterbruch verursacht hat und nach einer Reparatur die Anlage dort wieder angefahren werden, wo sie stehen geblieben ist. Schliesslich kann die Individualisierung der Klammern mit Vorteil zur Steuerung der Anlage eingesetzt werden, wenn beispielsweise bestimmte Klammern mit bestimmten Produkten aus der fortlaufenden Reihe der Klammern abgezweigt (ausgeschleust) und separaten Bearbeitungsvorgängen zugeführt werden sollen. In diesem Fall wird die Identität der Klammern fortlaufend überprüft und der Abzweigvorgang eingeleitet, wenn die gesuchte Klammer am Abzweigpunkt angelangt ist. Entsprechend kann die abgezweigte Klammer mit dem separat bearbeiteten Produkt später wieder an vorbestimmter Stelle in den Produktestrom eingefügt (eingeschleust) werden.

Bevorzugt werden gemäss einer Ausgestaltung der Erfindung als Tags funktechnisch ein- und/oder auslesbare Tags, insbesondere in Form von RFIDs, verwendet. Die Ein/Auslesevorrichtung ist dabei derart ausgebildet und/oder wird derart mitbewegt, dass jeweils der oder die Tags einer Klammer ungestört von den benachbarten Klammern ein- bzw. ausgelesen werden können. Ein solches Übersprechen mehrerer Klammern kann dadurch verhindert werden, dass die Antenne der Ein/Auslesevorrichtung ausreichend nah an den Tag der gewünschten Klammer herangeführt und gleichzeitig ausreichend fern von den benachbarten Klammern gehalten wird. Es können aber auch Abschirmmassnahmen oder ähnliche Vorkehrungen ergriffen werden, um den beteiligten Antennen eine Richtcharakteristik zu geben, die bezüglich der gewünschten Klammer selektiv ist.

Das Mitbewegen der Ein/Auslesevorrichtung kann auf unterschiedliche Weise erfolgen: So ist es denkbar, die Ein/Auslesevorrichtung über den ausgewählten Abschnitt des Transportweges mit der jeweiligen Klammer auf einer parallelen Bewegungsbahn mitzubewegen. Hierdurch werden über die Länge des ausgewählten Abschnitts konstante Abstandsverhältnisse zwischen der Klammer und der Ein/Auslesevorrichtung erreicht, die der Funkverbindung zugute kommen.

Es ist aber auch denkbar, dass die Ein/Auslesevorrichtung über den ausgewählten Abschnitt des Transportweges mit der jeweiligen Klammer auf einer im wesentlichen kreisbogenförmigen Bewegungsbahn mitbewegt wird, zu welcher der Transportweg näherungsweise tangential verläuft. Diese Ausgestaltung bietet sich vor allem dann an, wenn die Ein/Auslesevorrichtung auf vorteilhafte Weise in eine Be- oder Verarbeitungsstation integriert werden soll, die eine mit der Transportvorrichtung verzahnte Kreisbewegung ausführt, wie dies beispielsweise aus der EP-B1-1 275 607 oder der EP-B1-0 897 887 oder der EP-A1-0 550 828 bekannt ist.

Eine andere Ausgestaltung der Erfindung ist dadurch gekennzeichnet, dass eine begrenzte Anzahl von Ein/Auslesevorrichtungen eingesetzt wird, und dass die begrenzte Anzahl von Ein/Auslesevorrichtungen in einem geschlossenen Umlauf derart bewegt werden, dass in dem ausgewählten Abschnitt des Transportweges die Tags jeder Klammer ein- bzw. ausgelesen werden können. Hierdurch kann eine hohe Ein/Auslesehäufigkeit erreicht werden, bei gleichzeitig begrenztem apparativen Aufwand.

Wenn die Klammern jeweils mehrere separate Klammerteile umfassen, ist es von Vorteil, wenn (zumindest die wichtigen) Klammerteile jeweils mit wenigstens einem Tag versehen sind, und wenn auf dem ausgewählten Abschnitt des Transportweges mehrere der auf den Klammerteilen angeordneten Tags ein- bzw. ausgelesen werden. Auf diese Weise kann geprüft werden, ob die Klammern aus den jeweils aufeinander abgestimmten Teilen zusammengebaut sind, und/oder ob einzelne Teile der Klammer schadhaft sind.

Besonders einfach gestaltet sich der Zugriff auf die Tags, wenn gemäss einer anderen Ausgestaltung zum Ein- bzw. Auslesen der auf den Klammerteilen angeordneten Tags von aussen auf ein ausgewähltes Tag zugegriffen wird, und die Daten der anderen Tags über das ausgewählte Tag ein- bzw. ausgelesen werden.

In den Tags können Daten bzw. Informationen für die unterschiedlichsten Zwecke gespeichert werden. Insbesondere können in den Tags einer Klammer Daten zur Individualisierung oder Identifizierung der Klammer bzw. der Klammerteile abgelegt und/oder ausgelesen werden.

Vorteilhafterweise können in den Tags einer Klammer Daten über Art und/oder Herstellung und/oder Einsatz- bzw. Gebrauchsdauer der Klammer bzw. Klammerteile abgelegt werden.

Die Tags können aber auch zur Überwachung des Zustands der Klammern verwendet werden, wobei bei der Entdeckung von Funktionsstörungen in der Klammer oder fehlerhaften oder falschen Klammerteilen an der Klammer eine entsprechende Meldung erstattet wird. Bei vorteilhaften Ausführungsformen sind die Tags, insbesondere deren Antennen, derart ausgebildet, dass sie es erlauben berührungslos festzustellen, ob die Klammer offen oder geschlossen ist, oder ob sich ein Produkt in der geschlossenen Klammer befindet oder nicht. Diese Funktionalität zur Überwachung des Öffnungs-, Schliess- und Befüllungszustands kann zum Beispiel dadurch erreicht werden, dass Anteile der Antenne derart auf mehrere zusammenwirkende Teile der Klammer verteilt sind, so dass bei geschlossener leerer Klammer ein geschlossenen Antennenloop einer ersten Länge, bei geschlossener befüllter Klammer ein Antennenloop einer zweiten Länge und bei offener Klammer ein Antennenloop einer dritten Läge gebildet wird, die sich jeweils von geeigneten Lesegeräten voneinander unterscheiden lassen.

Eine Ausgestaltung der erfindungsgemässen Transportvorrichtung zeichnet sich dadurch aus, dass die Tags funktechnisch ein- und/oder auslesbare Tags, insbesondere in Form von RFIDs, sind, und dass die Ein/Auslesevorrichtung derart ausgebildet ist und/oder mit den Klammern mitbewegbar ist, dass jeweils der oder die Tags einer Klammer ungestört von den benachbarten Klammern ein- bzw. ausgelesen werden können.

Die wenigstens eine Ein/Auslesevorrichtung wird dabei vorzugsweise innerhalb der Übertragungsvorrichtung über den ausgewählten Abschnitt des Transportweges mit der jeweiligen Klammer auf einer parallelen Bewegungsbahn mitbewegt, respektive über einen Abschnitt des Transportwegs an diese angenähert. Die eigentliche Bewegungsbahn muss dabei nicht linear sein, sondern kann einer Vielzahl von Linienführungen im Raum folgen, die im wesentlichen nur durch die Einschränkungen hinsichtlich der Krümmungsradien bei den bekannten Fördereinrichtungen eingeschränkt sind. Wesentlich ist, dass die zur Interaktion vorgesehenen Elemente einander angenähert werden und bei knapper Beabstandung oder direktem Kontakt für eine bestimmte Zeit in engen räumlichen Kontext gebracht werden.

Oder es wird die wenigstens eine Ein/Auslesevorrichtung innerhalb der Übertragungsvorrichtung über den ausgewählten Abschnitt des Transportweges mit der jeweiligen Klammer auf einer im wesentlichen kreisbogenförmigen Bewegungsbahn mitbewegt wird, zu welcher der Transportweg näherungsweise tangential verläuft.

Eine andere Ausgestaltung der Transportvorrichtung nach der Erfindung ist dadurch gekennzeichnet, dass die Übertragungsvorrichtung eine Mehrzahl von Ein/Auslesevorrichtungen umfasst, und dass die Ein/Auslesevorrichtungen in einem geschlossenen Umlauf derart bewegt werden, dass in dem ausgewählten Abschnitt des Transportweges die Tags jeder Klammer ein- bzw. ausgelesen werden können.

Eine weitere Ausgestaltung der Transportvorrichtung nach der Erfindung ist dadurch gekennzeichnet, dass die Klammern jeweils mehrere separate Klammerteile umfassen, und dass die Klammerteile jeweils mit wenigstens einem Tag versehen sind , wobei insbesondere die auf den Klammerteilen angeordneten Tags untereinander Daten austauschen können.

Eine andere Ausgestaltung der Transportvorrichtung nach der Erfindung ist dadurch gekennzeichnet, dass in den Tags einer Klammer Daten zur Individualisierung oder Identifizierung der Klammer bzw. der Klammerteile abgelegt sind, wobei insbesondere in den Tags einer Klammer Daten über Art und/oder Herstellung und/oder Einsatz- bzw. Gebrauchsdauer der Klammer bzw. Klammerteile abgelegt sind.

Besonders günstig ist es, wenn bei der erfindungsgemässen Transportvorrichtung die Übertragungsvorrichtung Teil einer Bearbeitungsvorrichtung ist, welche zur Bearbeitung der transportierten Produkte mit der Transportvorrichtung zusammenwirkt.

Eine Ausgestaltung der Klammer ist dadurch gekennzeichnet, dass die Klammer jeweils mehrere separate Klammerteile umfasst, und dass mehrere der Klammerteile jeweils mit wenigstens einem Tag versehen sind, wobei die Tags funktechnisch ein- und/oder auslesbare Tags, insbesondere in Form von RFIDs, sind, dass wenigstens ein ausgewähltes der Tags von aussen ein- und/oder auslesbar ist, und dass andere Tags nur über das ausgewählte Tag ein- und/oder auslesbar sind.

Eine andere Ausgestaltung der Klammer zeichnet sich dadurch aus, dass die Klammer zumindest teilweise aus Kunststoff besteht, und dass Tags in den Kunststoff eingebettet sind.

Eine weitere Ausgestaltung ist, dadurch gekennzeichnet, dass in den Tags der Klammer Daten zur Individualisierung oder Identifizierung der Klammer bzw. der Klammerteile und/oder Daten über Art und/oder Herstellung und/oder Einsatz- bzw. Gebrauchsdauer der Klammer bzw. Klammerteile abgelegt sind.

### KURZBESCHREIBUNG DER FIGUREN

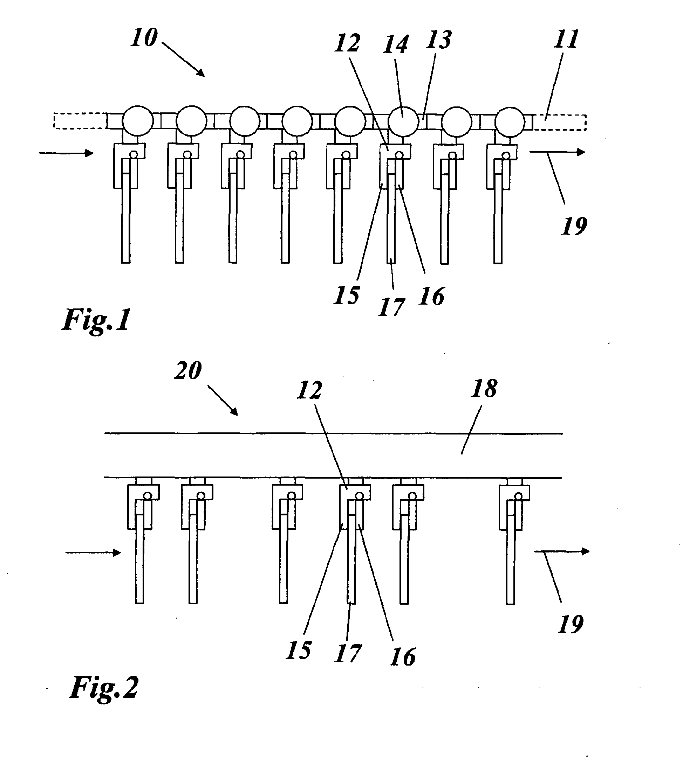

Die Erfindung soll nachfolgend anhand von Ausführungsbeispielen im Zusammenhang mit der Zeichnung näher erläutert werden. Es zeigen
- Fig. 1: einen stark vereinfachten Ausschnitt aus einer ersten Transportvorrichtung für Druckprodukte wie z.B. Zeitungen oder dgl., bei welcher eine Vielzahl von Klammern zum Halten der Produkte zu einer durchgehenden Transportkette zusammengeschlossen sind, und die zur Anwendung der Erfindung besonders geeignet ist;
- Fig. 2: einen stark vereinfachten Ausschnitt aus einer zweiten Transportvorrichtung für Druckprodukte wie z.B. Zeitungen oder dgl., bei welcher eine Vielzahl von Klammern zum Halten der Produkte mit veränderbarem Abstand in einer Schiene verfahrbar angeordnet sind, und die zur Anwendung der Erfindung besonders geeignet ist;

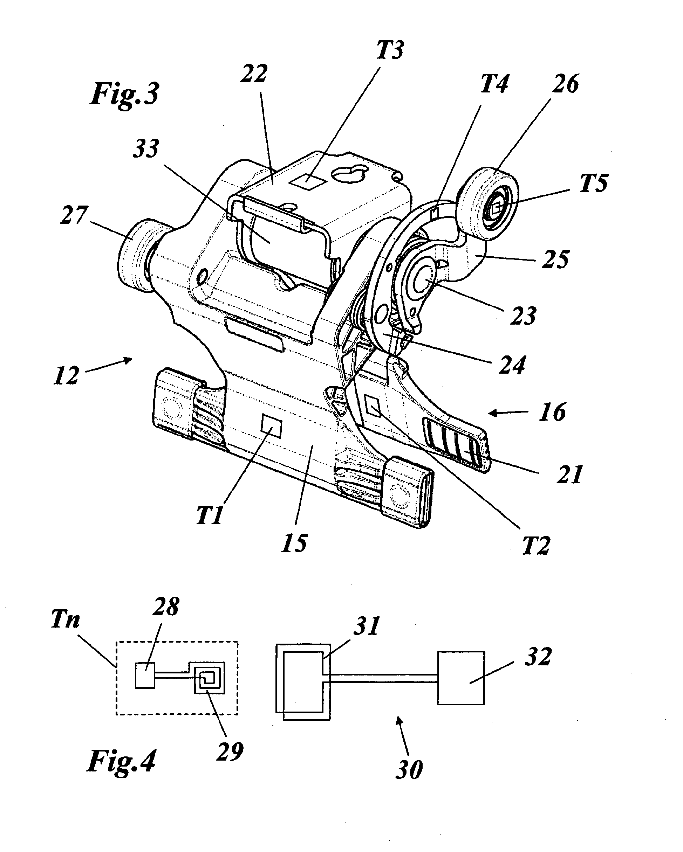

- Fig. 3: in einer perspektivischen Seitenansicht ein an sich bekanntes Beispiel einer Klammer, wie sie in den Vorrichtungen gemäss Fig. 1 oder 2 zum Einsatz kommt, mit verschiedenen, auf der Klammer angebrachten, drahtlos ein- und/oder auslesbaren Tags;
- Fig. 4: die schematische Anordnung eines der in Fig. 3 gezeigten Tags und der zugehörigen Ein/Auslesevorrichtung;

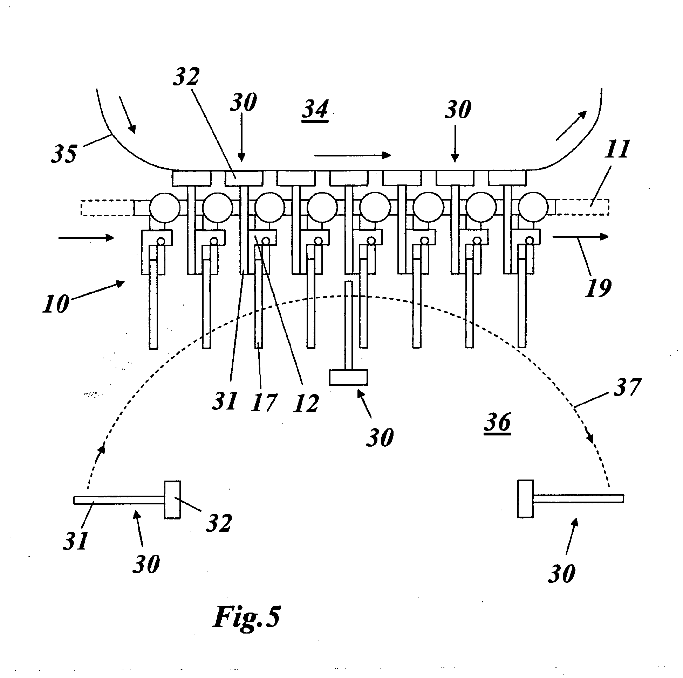

- Fig. 5: in der Seitenansicht zwei Ausführungsbeispiele von Übertragungsvorrichtungen nach der Erfindung, die im kämmenden Zusammenwirken von oben oder unten mit einer Transportvorrichtung gemäss Fig. 1 ein Ein- und/oder Auslesen der an den Klammern angebrachten Tags während des Betriebs ermöglichen;

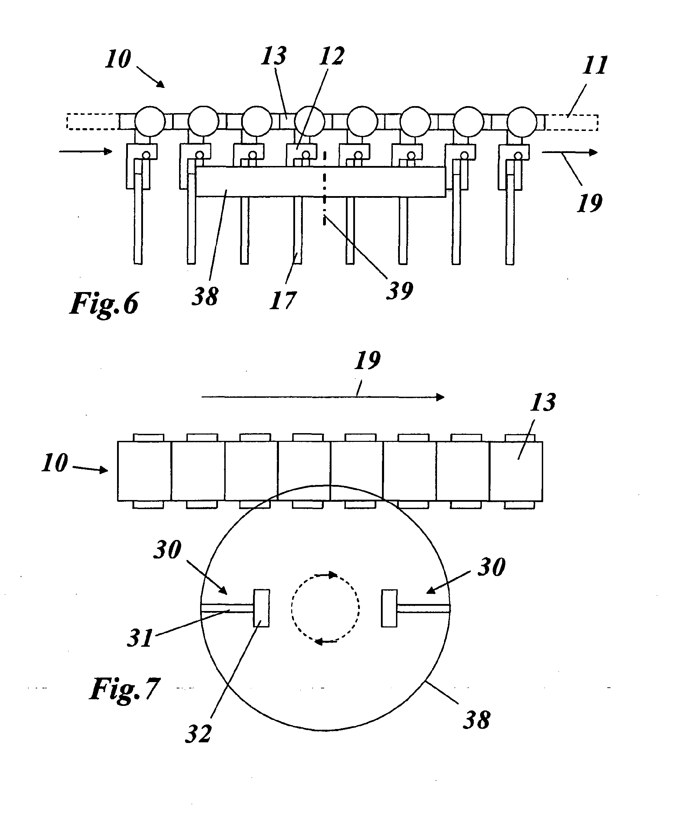

- Fig. 6: in der Seitenansicht ein weiteres Ausführungsbeispiel einer Übertragungsvorrichtung nach der Erfindung, die im kämmenden Zusammenwirken von der Seite mit einer Transportvorrichtung gemäss Fig. 1 ein Ein- und/oder Auslesen der an den Klammern angebrachten Tags während des Betriebs ermöglicht;
- Fig. 7: die Vorrichtung aus Fig. 6 in der Draufsicht von oben;

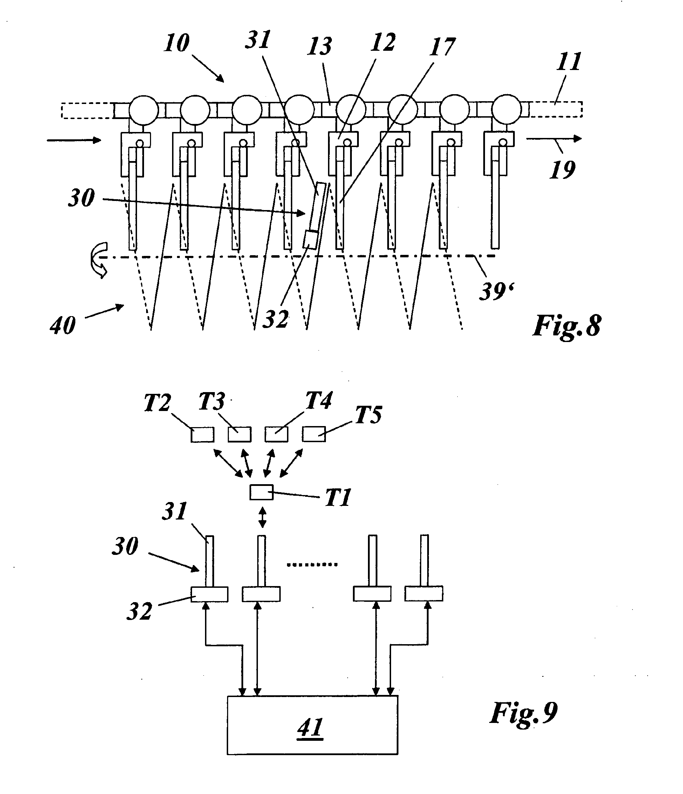

- Fig. 8: in der Seitenansicht ein anderes Ausführungsbeispiel einer Übertragungsvorrichtung nach der Erfindung, die im helixförmig kämmenden Zusammenwirken von unten mit einer Transportvorrichtung gemäss Fig. 1 ein Ein- und/oder Auslesen der an den Klammern angebrachten Tags während des Betriebs ermöglicht;
- Fig.9: eine stark vereinfachtes Schema der Schaltungsanordnung, wie sie innerhalb der Übertragungsvorrichtungen nach Fig. 5 bis 8 beispielhaft zum Einsatz kommen kann; und

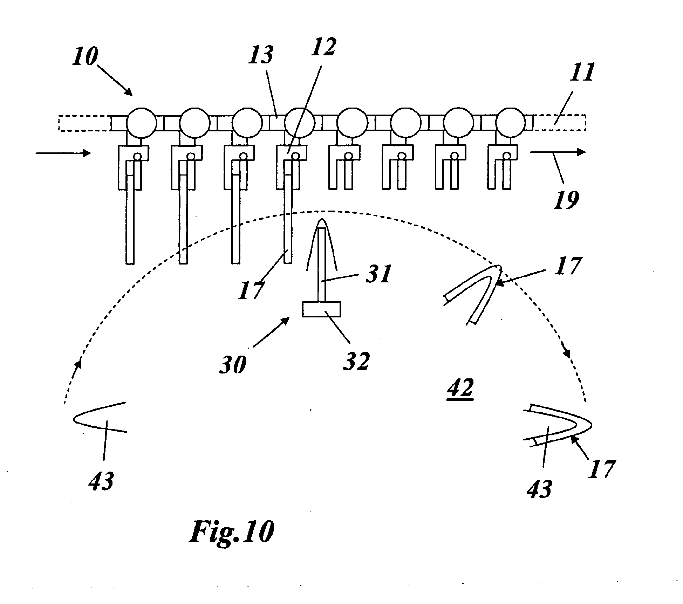

- Fig. 10: in der Seitenansicht ein weiteres Ausführungsbeispiel einer Übertragungsvorrichtung nach der Erfindung, die auf einer vorhandenen Verarbeitungstrommel basiert und im kämmenden Zusammenwirken von der Seite mit einer Transportvorrichtung gemäss Fig. 1 ein Ein- und/oder Auslesen der an den Klammern angebrachten Tags während des Betriebs ermöglicht.

### DETAILLIERTE BESCHREIBUNG BEVORZUGTER AUSFÜHRUNGSFORMEN

Fig. 1 zeigt einen stark vereinfachten Ausschnitt aus einer für die Realisierung der Erfindung geeigneten ersten Transportvorrichtung für Druckprodukte wie z.B. Zeitungen oder dgl., bei welcher eine Vielzahl von Klammern zum Halten der Produkte zu einer durchgehenden Transportkette zusammengeschlossen sind. Die Transportvorrichtung 10 der Fig. 1 umfasst eine Vielzahl von Klammern 12, die jeweils zwei Backen 15 und 16 aufweisen, die zum Ergreifen und Halten der flachen Produkte 17 geöffnet und zangenartig geschlossen werden können. Jede der Klammern 12 ist an einem Klammerträger 13 befestigt, der mit Laufrollen 14 versehen ist. Die Klammerträger 13 mit den daran befestigten Klammern 12 sind in einer Reihe hintereinander angeordnet und bilden eine Transportkette 11, die entlang eines Transportweges 19 läuft, der im Beispiel der Fig. 1 horizontal und gerade verläuft, aber auch gekrümmt, vertikal oder wie oben bereits erwähnt entlang einer anderen gewünschten Linienführung im Raum verlaufen kann. Die Produkte (Druckprodukte, insbesondere Zeitungen) 17 werden in Fig. 1 hängend transportiert, können aber auch auf der Transportkette oben aufliegen, wenn die Transportkette einen geschlossenen Umlauf durchläuft und mit den Klammern 12 auf der Oberseite in der Gegenrichtung zurückgeführt wird.

Eine andere für die Realisierung der Erfindung geeignete Transportvorrichtung ist in Fig. 2 wiedergegeben. Die Transportvorrichtung 20 der Fig. 2 umfasst ebenfalls die Klammern 12 mit den Backen 15 und 16. Die Klammern 12 laufen jedoch hier in einer Transportschiene 18 und können untereinander unterschiedliche, veränderbare Abstände einnehmen.

Die einzelne Klammer 12 kann beispielsweise den in Fig. 3 gezeigten Aufbau haben: Die Klammer 12 setzt sich aus mehreren einzelnen Klammerteilen zusammen, nämlich den beiden Backen 15, 16, einem Tragbügel 22, einer Schwenkachse 23, einem Sperrhebel 24, einem Betätigungsarm 25 und zwei Führungsrollen 26, 27. Die eine Backe 15 ist als Kunststoff-Spritzgussteil ausgebildet. Sie geht am unteren Ende in einen Querträger über. Am oberen Ende ist in der Backe 15 eine parallel zum Querträger orientierte Schwenkachse 23 eingesetzt. Die andere Backe 16 umfasst einen zweiten Querträger 21, der dem ersten Querträger der Backe 15 gegenüberliegt. Der zweite Querträger 21 ist am freien Ende eines Federbandes 33 befestigt, welches nach oben zur Schwenkachse 23 geführt und mehrfach um die Schwenkachse 23 gewickelt ist. Wird die Schwenkachse 23 zum Schliessen der zweiten Backe 16 gedreht, wird das Federband 33 wie eine Spiralfeder gespannt und drückt den zweiten Querträger 21 federnd gegen den ersten Querträger der ersten Backe 15. Das Drehen der Schwenkachse 23 wird durch einen aufgesetzten Betätigungsarm 25 bewirkt, an dessen einem Ende eine Führungsrolle 26 zum Abtasten einer an der Transportvorrichtung angebrachten Führungskulisse drehbar befestigt ist. Das andere Ende des Betätigungsarmes 25 wird bei geschlossener Klammer durch einen Sperrhebel 24 gesperrt. Wird der Sperrhebel 24 gelöst, schwenkt der durch eine Feder vorgespannte Betätigungsarm 25 in Öffnungsrichtung und die Klammer 12 gibt das Produkt frei. Der Tragbügel 22, der - wie die Teile 24 und 25 aus Metall ist - ist schwenkbar an der Schwenkachse 23 gelagert.

Es versteht sich von selbst, dass die in Fig. 3 dargestellte Klammer 12 und ihre einzelnen Klammerteile bei den schnellen Transport- sowie Schliess- und Öffnungsvorgängen hohen mechanischen Belastungen ausgesetzt sind. So kann es passieren, dass die Backe 15 bricht, oder der Sperrhebel 24 abknickt oder die Führungsrollen 26, 27 verschleissen oder brechen.

Um derartige Zwischenfälle möglichst zu vermeiden oder unwahrscheinlich zu machen, ist es von Vorteil, die Klammer 12 selbst sowie ihre einzelnen Klammerteile mit ein- und/oder auslesbaren Tags T1,..,T5 auszustatten, die berührungslos ausgelesen oder mit neuen Daten beschrieben werden können. Ein erster Satz von Daten kann dabei der Identifizierung der Klammer 12 als solcher dienen, so dass alle Klammern 12 der Transportvorrichtung 10 bzw. 20 individuell adressiert und identifiziert werden können. Hierdurch ergibt sich die Möglichkeit, bei der Steuerung der Transportvorrichtung 10, 20 jede Klammer 12 einzeln anzusprechen und einzeln innerhalb des Systems von einer Bearbeitungsstation zur nächsten zu führen. Des Weiteren ergibt sich die Möglichkeit, jeder Klammer 12 ihre individuellen Herstellungsparameter, ihren "Lebenslauf" und ihre Betriebsdauer zuzuordnen.

Diese individualisierenden Datensätze sind nicht auf die Ebene der Klammer beschränkt, sondern können mit Vorteil auch auf der tieferen Ebene der Klammerteile eingesetzt werden. In diesem Fall ist jedem wichtigen Klammerteil sein eigener Tag mit seinem eigenen Datensatz und "Lebenslauf" zugeordnet, so dass sichergestellt ist, dass die Klammer immer aus den richtigen, zueinander optimal passenden Klammerteilen gebildet wird. Dies ist insbesondere dann wichtig, wenn nach einem Störfall eine Klammer repariert und ein oder mehrere Klammerteile ersetzt werden müssen. In der Anlage kann dann geprüft werden, ob die richtigen Ersatzteile verwendet worden sind und es kann ggf. korrigierend eingegriffen werden.

In den Tags T1,..,T5 der Klammer 12 können aber auch Daten eingespeichert werden, die sich auf das gerade transportierte oder das zu transportierende Produkt beziehen, so dass eine lesbare Kennzeichnung des Produktes selbst unterbleiben kann. Die Klammern 12 können so dazu verwendet werden, bestimmte Produkte gezielt zu vereinzeln und an anderer Stelle zu einer neuen Gruppe zusammenzustellen, um bestimmte Kundenanforderungen zu erfüllen. Werden beispielsweise transportierte Zeitungen an einer Stelle der Transportvorrichtung 10, 20 mit individuellen Adressaufklebern versehen, kann die entsprechende Adressinformation gleichzeitig in die Tags T1,..,T5 der tragenden Klammer 12 eingespeichert werden, so dass durch Auslesen der Klammern 12 an anderer Stelle Zeitungen für bestimmte Postleitzahlgebiete vereinzelt und zu einer eigenständigen Gruppe zusammengefasst werden können.

Die auf der Ebene der Klammerteile angesiedelten Tags T1,..,T5 können aber auch dazu benutzt werden, die Funktionstüchtigkeit einzelner Klammerteile zu überwachen. Bricht in Fig. 3 beispielsweise der lange Arm des Sperrhebels 24 nahe dem Drehpunkt ab, ist das Tag T4 nicht länger an der Klammer 12 vorhanden, so dass seine Abfrage kein Ergebnis bringt In diesem Fall kann eine entsprechende Fehlermeldung abgegeben werden, die eine Störung am Sperrhebel 24 signalisiert.

Die Tags T1,..,T5 sind vorzugsweise als RFID-Tags ausgebildet und haben den in Fig. 4 am Beispiel des Tags Tn gezeigten Aufbau, der eine (aktive oder passive) elektronische Schaltung 28 umfasst, an die eine Antenne 29 zum Senden und/oder Empfangen angeschlossen ist. Die Tags T1,..,T5; Tn können an der Klammer 12 bzw. den einzelnen Klammerteilen in unterschiedlicher Weise angebracht sein. Sie sollten dabei fest mit dem Teil verbunden und ausreichend gegen belastende Umwelteinflüsse mechanischer, thermischer oder chemischer Natur geschützt sein. Bei Metallteilen können sie aufgeklebt und mit einem schützenden Überzug versehen werden. Bei Kunststoffspritzgussteilen können sie eingelassen oder umspritzt werden.

Die Anordnung der Tags T1,..,T5; Tn an der Klammer bzw. den Klammerteilen muss zusätzlich einen ausreichenden Zugang einer Ein/Auslesevorrichtung 30 sicherstellen (Fig. 4, die im einfachsten Fall eine Antenne 31 und eine Steuereinheit bzw. Sende/Empfangseinheit 32 umfasst. Bei beengten Platzverhältnissen ist es zweckmässig, nur die Antenne 31 in die Nähe der abzulesenden Tags zu bringen, während die angeschlossene Steuereinheit 32 weit entfernt platziert werden kann.

Grundsätzlich ist es denkbar, dass alle Tags T1,..,T5 einer Klammer 12 einzeln von der Ein/Auslesevorrichtung 30 angesprochen werden. Dies erfordert jedoch einen hohen Aufwand bezüglich der Zugänglichkeit und Selektivität. Es ist daher zweckmässig, wenn gemäss Fig. 9 nur ein Tag T1 von aussen angesprochen wird, der innerhalb der Klammer 12 direkt mit den anderen Tags T2,..,T5 auf den Klammerteilen kommuniziert und deren Daten ein- bzw. ausliest. Die zu den Ein/Auslesevorrichtungen 30 gehenden bzw. von den Ein/Auslesevorrichtungen 30 kommenden Daten werden in einer Zentraleinheit 41 erzeugt bzw. verarbeitet und im Gesamtsystem zur Steuerung oder Überwachung eingesetzt.

Ein wesentlicher Punkt der Kommunikation zwischen den Tags T1,..,T5 und der Ein/Auslesevorrichtung 30 besteht darin, dass die Ein/Auslesevorrichtung 30 in die Nähe der jeweiligen anzusprechenden Klammer gebracht und über einen ausgewählten Abschnitt des Transportweges 19 dieser Klammer mit dieser Klammer mitbewegt wird. Hierdurch wird das Zeitfenster vergrössert, in welchem eine für den sicheren Datenaustausch zwischen Tag und Ein/Auslesevorrichtung 30 geeignete Funkverbindung zwischen beiden besteht, ohne dass sich störende Einflüsse unmittelbar benachbarter Klammern bemerkbar machen.

Gemäss Fig. 5 (oberer Teil) kann ein solches vergrössertes Zeitfenster dadurch erreicht werden, dass die Ein/Auslesevorrichtung 30, die in Fig. 5 und den folgenden Figuren schematisiert als aus einer länglichen Antenne 31 und einer am einen Ende angeordneten Steuereinheit 32 bestehend gezeigt ist, über den ausgewählten Abschnitt des Transportweges 19 mit der jeweiligen Klammer 12 auf einer parallelen Bewegungsbahn mitbewegt wird. Im Beispiel der Fig. 5 (oben) ist dazu eine Übertragungsvorrichtung 34 vorgesehen, innerhalb derer eine Vielzahl von Ein/Auslesevorrichtungen 30 auf einer geschlossenen Bewegungsbahn 35 bewegt werden, die über eine gewisse Strecke parallel zum Transportweg 19 der Transportvorrichtung verläuft. Die Ein/Auslesevorrichtungen 30 greifen auf dieser Strecke in den Förderstrom der Transportvorrichtung 10 so ein, dass das aktive Ende der Antenne 31 direkt an der mit dem Tag T1 versehenen Backe 15 der Klammer 12 zu liegen kommt und selektiv mit diesem Tag Verbindung aufnehmen kann. Dabei wird jeder Klammer auf dieser Strecke jeweils eine Ein/Auslesevorrichtung 30 zugeordnet. Durch die parallele Führung der Bahnen 19 und 35 bleiben die Kopplungsverhältnisse zwischen der Ein/Auslesevorrichtung 30 und dem Tag über eine längere Strecke konstant, was für die Datenübertragung besonders günstig ist.

Es ist aber auch denkbar und für den praktischen Betrieb besonders wichtig, wenn - wie in Fig. 5 (unten) dargestellt - die Ein/Auslesevorrichtungen 30 über den ausgewählten Abschnitt des Transportweges 19 mit der jeweiligen Klammer 12 auf einer im wesentlichen kreisbogenförmigen Bewegungsbahn 37 mitbewegt wird, zu welcher der Transportweg 19 näherungsweise tangential verläuft. Diese Art des ("zahnradförmigen") Eingriffs der Ein/Auslesevorrichtungen 30 in die Transportkette kann auf einfache Weise dadurch realisiert werden, dass die Ein/Auslesevorrichtungen 30 in bereits vorhandene Bearbeitungsstationen integriert werden, die mit einer kreisförmigen Bewegungsbahn in die Transportvorrichtung 10, 20 eingreifen, wie dies beispielsweise aus der EP-B1-1 275 607 oder der EP-B1-0 897 887 oder der EP-A1-0 550 828 bekannt ist. Der Eingriff kann dabei von der Seite der Klammern 12 her erfolgen, wie dies in Fig. 5 unten für die Bewegungsbahn 37 gezeigt ist. Er kann aber auch von der Gegenseite her erfolgen (in Fig. 5 wird dann die Bewegungsbahn 35 durch die Bewegungsbahn 37 ersetzt).

Eine andere Möglichkeit besteht darin mit einer Übertragungsvorrichtung 38 mit kreisförmiger Bewegungsbahn der Ein/Auslesevorrichtungen 30 um eine vertikale Drehachse 39 von der Seite in die Transportvorrichtung 10 einzugreifen, wie dies in Fig. 6 und 7 gezeigt ist. In allen Fällen sind nur einige wenige Ein/Auslesevorrichtungen 30 beispielhaft eingezeichnet, um deren Bewegung grundsätzlich zu verdeutlichen.

Es ist aber auch denkbar, eine Mitbewegung der Ein/Auslesevorrichtungen 30 dadurch zu erzeugen, dass diese gemäss Fig. 8 in einer Übertragungsvorrichtung 40 angeordnet sind, die um eine zum Transportweg parallele Drehachse 39' drehend in einem schneckenartigen Eingriff mit der Transportvorrichtung 10 steht.

Eine besondere Art der Realisierung ergibt sich, wenn die Transportvorrichtung 10 mit einer Verarbeitungstrommel 42 zusammenwirkt (Fig. 10), in der auf einem Umfang verteilt angeordnet sattelförmige Auflagen 43 vorgesehen sind, auf welchen die von den Klammern gehaltenen Produkte 17 abgelegt werden. Hier kann jeder der sattelförmigen Auflagen 43 eine Ein/Auslesevorrichtung 30 zugeordnet werden, die beim kämmenden Eingriff der Verarbeitungstrommel 42 mit der Transportvorrichtung 10 mit der jeweiligen Klammer Verbindung aufnimmt.

In weiteren bevorzugten Ausführungsformen, die nicht in den Figuren dargestellt sind, werden die Bewegungsbahnen von Ein/Auslesevorrichtung zumindest über einen Abschnitt eines nicht-linearen Förderweges aufeinander angepasst. So kann zum Beispiel ein Transportweg über einen ausgewählten Abschnitt einer zum Beispiel kreisbogenförmigen Bewegungsbahn von Ein/Auslesevorrichtungen angepasst werden, so dass die Transportvorrichtung in diesem Bereich ebenfalls kreisbogenförmig verläuft. Alternativ lässt sich die Bewegungsbahn von Ein/Auslesevorrichtungen in einer Kreisbogenform, angepasst an einen kreis- oder kreisbogenförmigen Verlauf eines Transportweges, führen. Dieses Grundprinzip der gegenseitigen Anpassung in der Linienführung ist nicht auf die Kreisbogenform beschränkt, sondern lässt sich bei beliebigen Linienführungen im Raum realisieren.

Obwohl in der vorliegenden Beschreibung die Erfindung anhand von Klammertransporteuren beschrieben ist, ist es für den Fachmann klar, dass sich die erfinderische Idee vollumfänglich auf Taschen- oder Leiterförderer übertragen lässt.

### LISTE DER BEZUGSZEICHEN

- 10,20: Transportvorrichtung
- 11: Transportkette
- 12: Klammer
- 13: Klammerträger
- 14: Laufrolle
- 15,16: Backe
- 17: Produkt
- 18: Transportschiene
- 19: Transportweg (Transportrichtung)
- 21: Querträger
- 22: Tragbügel
- 23: Schwenkachse
- 24: Sperrhebel
- 25: Betätigungsarm
- 26,27: Führungsrolle
- 28: elektronische Schaltung
- 29,31: Antenne
- 30: Ein/Auslesevorrichtung (drahtlos)
- 32: Steuereinheit
- 33: Federband
- 34,36: Übertragungsvorrichtung
- 35,37: Bewegungsbahn
- 38,40: Übertragungsvorrichtung
- 39,39': Drehachse
- 41: Zentraleinheit
- 42: Verarbeitungstrommel
- 43: Auflage (sattelförmig)
- T1,..,T5,Tn: Tag (z.B. RFID)

## Patentansprüche

1. Verfahren zum Überwachen und/oder Steuern einer Transportvorrichtung (10, 20), bei welcher eine Vielzahl von gleichartigen Produkten (17), insbesondere Druckprodukten wie Zeitungen, Zeitschriften oder dgl., mittels einzelner, in einer Reihe hintereinander angeordneter Klammern (12) lösbar gehalten und entlang einem Transportweg (19) in Abfolge transportiert werden, wobei an den Klammern (12) berührungslos ein- und/oder auslesbare Tags (T1,..,T5; Tn) vorgesehen werden, **dadurch gekennzeichnet, dass** zum Ein- und/oder Auslesen vorgegebener Datenmengen in den Tags (T1,..,T5; Tn) einer Klammer (12) eine Ein/Auslesevorrichtung (30) in die Nähe der jeweiligen Klammer gebracht und über einen ausgewählten Abschnitt des Transportweges (19) mit der jeweiligen Klammer (12) mitbewegt wird.

2. Verfahren nach Anspruch 1, **dadurch gekennzeichnet, dass** als Tags funktechnisch ein- und/oder auslesbare Tags (T1,..,T5; Tn), insbesondere in Form von RFIDs, verwendet werden, und dass die Ein/Auslesevorrichtung (30) derart ausgebildet ist und/oder mitbewegt wird, dass jeweils der oder die Tags (T1,..,T5; Tn) einer Klammer ungestört von den benachbarten Klammern ein- bzw. ausgelesen werden können.

3. Verfahren nach Anspruch 1 oder 2, **dadurch gekennzeichnet, dass** eine Bewegungsbahn von Ein/Auslesevorrichtungen und ein Verlauf eines Transportweges über den ausgewählten Abschnitt des Transportweges aufeinander angepasst sind, wobei vorzugsweise die Ein/Auslesevorrichtung (30) über den ausgewählten Abschnitt des Transportweges (19) mit der jeweiligen Klammer (12) auf einer parallelen Bewegungsbahn (35) mitbewegt wird.

4. Verfahren nach Anspruch 1 oder 2, **dadurch gekennzeichnet, dass** die Ein/Auslesevorrichtung (30) über den ausgewählten Abschnitt des Transportweges (19) mit der jeweiligen Klammer (12) auf einer im wesentlichen kreisbogenförmigen Bewegungsbahn (37) mitbewegt wird, zu welcher der Transportweg (19) näherungsweise tangential verläuft.

5. Verfahren nach einem der Ansprüche 1 bis 5, **dadurch gekennzeichnet, dass** eine begrenzte Anzahl von Ein/Auslesevorrichtungen (30) eingesetzt wird, und dass die begrenzte Anzahl von Ein/Auslesevorrichtungen (30) in einem geschlossenen Umlauf derart bewegt werden, dass in dem ausgewählten Abschnitt des Transportweges (19) die Tags (T1,..,T5; Tn) jeder Klammer (12) ein- bzw. ausgelesen werden können.

6. Verfahren nach einem der Ansprüche 1 bis 5, **dadurch gekennzeichnet, dass** die Klammern (12) jeweils mehrere separate Klammerteile (13,..,16; 21,..,27) umfassen, dass die Klammerteile (13,..,16; 21,..,27) jeweils mit wenigstens einem Tag (T1,..,T5; Tn) versehen sind, und dass auf dem ausgewählten Abschnitt des Transportweges (19) mehrere der auf den Klammerteilen (13,..,16; 21,..,27) angeordneten Tags (T1,..,T5; Tn) ein- bzw. ausgelesen werden.

7. Verfahren nach Anspruch 6, **dadurch gekennzeichnet, dass** zum Ein- bzw. Auslesen der auf den Klammerteilen (13,..,16; 21,..,27) angeordneten Tags (T1,..,T5; Tn) von aussen auf ein ausgewähltes Tag (T1) zugegriffen wird, und dass die Daten der anderen Tags (T2,..,T5) über das ausgewählte Tag (T1) ein- bzw. ausgelesen werden.

8. Verfahren nach einem der Ansprüche 1 bis 7, **dadurch gekennzeichnet, dass** in den Tags (T1,..,T5; Tn) einer Klammer (12) Daten zur Individualisierung oder Identifizierung der Klammer (12) bzw. der Klammerteile (13,..,16; 21,..,27) abgelegt und/oder ausgelesen werden.

9. Verfahren nach Anspruch 8, **dadurch gekennzeichnet, dass** in den Tags (T1,..,T5; Tn) einer Klammer (12) Daten über Art und/oder Herstellung und/oder Einsatz- bzw. Gebrauchsdauer der Klammer (12) bzw. Klammerteile (13,..,16; 21,..,27) abgelegt werden.

10. Verfahren nach einem der Ansprüche 1 bis 9, **dadurch gekennzeichnet, dass** die Tags (T1,..,T5; Tn) zur Überwachung des Zustands der Klammern (12) verwendet werden, und dass bei der Entdeckung von Funktionsstörungen in der Klammer (12) oder fehlerhaften oder falschen Klammerteilen (13,..,16; 21,..,27) an der Klammer (12) eine entsprechende Meldung erstattet wird.

11. Verfahren nach einem der Ansprüche 1 bis 10, **dadurch gekennzeichnet, dass** die Tags zur Überwachung des Öffnungs-, Schliess- und Befüllungszustands der Klammern (12) verwendet werden.

12. Transportvorrichtung (10, 20) zur Durchführung des Verfahrens nach einem der Ansprüche 1 bis 10, welche Transportvorrichtung (10, 20) eine Vielzahl von Klammern (12) umfasst, die in einer Reihe hintereinander angeordnet entlang einem Transportweg (19) bewegbar sind und zum lösbaren Halten von gleichartigen Produkten (17), insbesondere Druckprodukten wie Zeitungen oder dgl., ausgebildet sind, wobei an den Klammern (12) berührungslos ein- und/oder auslesbare Tags (T1,..,T5; Tn) angeordnet sind, und wobei zum Ein- und/oder Auslesen vorgegebener Datenmengen in den Tags (T1,..,T5; Tn) einer Klammer (12) eine mit der Transportvorrichtung (10, 20) zusammenwirkende Übertragungsvorrichtung (34, 36, 38, 40) mit wenigstens einer Ein/Auslesevorrichtung (30) vorgesehen ist, welche Ein/Auslesevorrichtung (30) mittels der Übertragungsvorrichtung (34, 36, 38, 40) in die Nähe der jeweiligen Klammer gebracht und über den ausgewählten Abschnitt des Transportweges (19) mit der jeweiligen Klammer (12) mitbewegt werden kann.

13. Transportvorrichtung nach Anspruch 12, **dadurch gekennzeichnet, dass** die Tags funktechnisch ein- und/oder auslesbare Tags (T1,..,T5; Tn), insbesondere in Form von RFIDs, sind, und dass die Ein/Auslesevorrichtung (30) derart ausgebildet ist und/oder mit den Klammern (12) mitbewegbar ist, dass jeweils der oder die Tags (T1,..,T5; Tn) einer Klammer ungestört von den benachbarten Klammern ein- bzw. ausgelesen werden können.

14. Transportvorrichtung nach Anspruch 12 oder 13, **dadurch gekennzeichnet, dass** eine Bewegungsbahn von Ein/Auslesevorrichtungen und ein Verlauf eines Transportweges über den ausgewählten Abschnitt des Transportweges aufeinander angepasst sind, wobei vorzugsweise die wenigstens eine Ein/Auslesevorrichtung (30) innerhalb der Übertragungsvorrichtung (34) über den ausgewählten Abschnitt des Transportweges (19) mit der jeweiligen Klammer (12) auf einer parallelen Bewegungsbahn (35) mitbewegt wird.

15. Transportvorrichtung nach Anspruch 12 oder 13, **dadurch gekennzeichnet, dass** die wenigstens eine Ein/Auslesevorrichtung (30) innerhalb der Übertragungsvorrichtung (36, 38) über den ausgewählten Abschnitt des Transportweges (19) mit der jeweiligen Klammer (12) auf einer im wesentlichen kreisbogenförmigen Bewegungsbahn (37) mitbewegt wird, zu welcher der Transportweg (19) näherungsweise tangential verläuft.

16. Transportvorrichtung nach einem der Ansprüche 12 bis 15, **dadurch gekennzeichnet, dass** die Übertragungsvorrichtung (34, 36, 38, 40) eine Mehrzahl von Ein/Auslesevorrichtungen (30) umfasst, und dass die Ein/Auslesevorrichtungen (30) in einem geschlossenen Umlauf derart bewegt werden, dass in dem ausgewählten Abschnitt des Transportweges (19) die Tags (T1,..,T5; Tn) jeder Klammer (12) ein- bzw. ausgelesen werden können.

17. Transportvorrichtung nach einem der Ansprüche 12 bis 16, **dadurch gekennzeichnet, dass** die Klammern (12) jeweils mehrere separate Klammerteile (13,..,16; 21,..,27) umfassen, und dass die Klammerteile (13,..,16; 21,..,27) jeweils mit wenigstens einem Tag (T1,..,T5; Tn) versehen sind.

18. Transportvorrichtung nach Anspruch 17, **dadurch gekennzeichnet, dass** die auf den Klammerteilen (13,..,16; 21,..,27) angeordneten Tags (T1,..,T5; Tn) untereinander Daten austauschen können.

19. Transportvorrichtung nach einem der Ansprüche 12 bis 18, **dadurch gekennzeichnet, dass** in den Tags (T1,..,T5; Tn) einer Klammer (12) Daten zur Individualisierung oder Identifizierung der Klammer (12) bzw. der Klammerteile (13,..,16; 21,..,27) abgelegt sind.

20. Transportvorrichtung nach Anspruch 19, **dadurch gekennzeichnet, dass** in den Tags (T1,..,T5; Tn) einer Klammer (12) Daten über Art und/oder Herstellung und/oder Einsatz- bzw. Gebrauchsdauer der Klammer (12) bzw. Klammerteile (13,..,16; 21,..,27) abgelegt sind.

21. Transportvorrichtung nach einem der Ansprüche 12 bis 20, **dadurch gekennzeichnet, dass** die Übertragungsvorrichtung (34, 36, 38, 40) Teil einer Bearbeitungsvorrichtung ist, welche zur Bearbeitung der transportierten Produkte (17) mit der Transportvorrichtung (10, 20) zusammenwirkt.

## Claims

1. A method for monitoring and/or controlling a transport device (10, 20), in which a plurality of similar products (17), in particular printed products such as newspapers, magazines or the like, are detachably held by means of individual clamps (12) disposed consecutively one after another and are successively transported along a transport path (19), tags (T1, ..., T5; Tn) that can be contactlessly read in and/or out being provided on the clamps (12), **characterized in that** a read-in/read-out device (30) is moved close to the respective clamp for reading in and/or out predefined data volumes in the tags (T1, ..., T5; Tn) and is moved together with the respective clamp (12) over a selected section of the transport path (19).

2. The method according to claim 1, **characterized in that** the tags used are tags (T1, ..., T5; Tn) that can be read in and/or out using radio technology, in particular in the form of RFIDs, and the read-in/read-out device (30) is designed and/or moved in such a way that in each case the tag or tags (T1, ..., T5; Tn) in one clamp can be read in or out undisturbed by the neighboring clamps.

3. The method according to claim 1 or 2, **characterized in that** a movement path of read-in/read-out devices and a progression of a transport path over the selected section of the transport path are matched to each other, wherein the read-in/read-out device (30) is preferably moved together with the respective clamp (12) on a parallel movement path (35) over the selected section of the transport path (19).

4. The method according to claim 1 or 2, **characterized in that**, over the selected section of the transport path (19), the read-in/read-out device (30) is moved together with the respective clamp (12) on a substantially circular arc-shaped movement path (37), in relation to which the transport path (19) has an approximately tangential progression.

5. A method according to any one of claims 1 to 5, **characterized in that** a limited number of read-in/read-out devices (30) are used, and the limited number of read-in/read-out devices (30) are moved on a closed orbit in such a way that the tags (T1, ... , T5; Tn) of each clamp (12) can be read in or out in the selected section of the transport path (19).

6. A method according to any one of claims 1 to 5, **characterized in that** the clamps (12) in each case comprise a plurality of separate clamp parts (13, ..., 16; 21, ..., 27), the clamp parts (13, ..., 16; 21, ..., 27) are in each case provided with at least one tag (T1, ..., T5; Tn), and, on the selected section of the transport path (19), a plurality of the tags (T1, ..., T5; Tn) disposed on the clamp parts (13, ..., 16; 21, ..., 27) are read in or out.

7. The method according to claim 6, **characterized in that** a selected tag (T1) is accessed from the outside for reading in or out the tags (T1, ..., T5; Tn) disposed on the clamp parts (13, ..., 16; 21, ... 27), and the data of the other tags (T2, ..., T5) are read in or out via the selected tag (T1).

8. A method according to any one of claims 1 to 7, **characterized in that** the tags (T1, ..., T5; Tn) of a clamp (12) are used to store and/or read out data for customizing or identifying the clamp (12) or the clamp parts (13, ..., 16; 21, ..., 27).

9. The method according to claim 8, **characterized in that** the tags (T1, ..., T5; Tn) of a clamp (12) are used to store data about the type and/or production and/or duration of use or useful life of the clamp (12) or clamp parts (13, ..., 16; 21, ..., 27).

10. A method according to any one of claims 1 to 9, **characterized in that** the tags (T1, ..., T5; Tn) are used to monitor the state of the clamps (12), and an appropriate message is issued when malfunctions in the clamp (12) or defective or incorrect clamp parts (13, ..., 16; 21, ..., 27) on the clamp (12) are detected.

11. A method according to any one of claims 1 to 10, **characterized in that** the tags are used to monitor the open, closed and fill states of the clamps (12).

12. A transport device (10, 20) for carrying out the method according to any one of claims 1 to 10, the transport device (10, 20) comprising a plurality of clamps (12), which are disposed consecutively one after another and can be moved along a transport path (19) and which are designed to detachably hold similar products (17), in particular printed products such as newspapers or the like, wherein tags (T1, ..., T5; Tn) that can be contactlessly read in and/or out are disposed on the clamps (12), and wherein, for the purpose of reading in or out predefined data volumes in the tags (T1, ... , T5; Tn) of a clamp (12), a transmission device (34, 36, 38, 40) cooperating with the transport device (10, 20) and having at least one read-in/read-out device (30) is provided, the read-in/read-out device (30) being moved close to the respective clamp by means of the transmission device (34, 36, 38, 40) and being movable together with the respective clamp (12) over the selected section of the transport path (19).

13. The transport device according to claim 12, **characterized in that** the tags are tags (T1, ..., T5; Tn) that can be read in and/or out using radio technology, in particular in the form of RFIDs, and the read-in/read-out device (30) is designed and/or can be moved together with the clamps (12) in such a way that in each case the tag or tags (T1, ..., T5; Tn) of one clamp can be read in or out undisturbed by the neighboring clamps.

14. The transport device according to claim 12 or 13, **characterized in that** a movement path of read-in/read-out devices and a progression of a transport path over the selected section of the transport path are matched to each other, wherein the at least one read-in/read-out device (30) within the transmission device (34) is preferably moved together with the respective clamp (12) on a parallel movement path (35) over the selected section of the transport path (19).

15. The transport device according to claim 12 or 13, **characterized in that**, over the selected section of the transport path (19), the at least one read-in/readout device (30) within the transmission device (36, 38) is moved together with the respective clamp (12) on a substantially circular arc-shaped movement path (37), in relation to which the transport path (19) has an approximately tangential progression.

16. A transport device according to any one of claims 12 to 15, **characterized in that** the transmission device (34, 36, 38, 40) comprises a plurality of read-in/read-out devices (40), and the read-in/read-out devices (30) are moved on a closed orbit in such a way that the tags (T1, ... , T5; Tn) of each clamp (12) can be read in or out in the selected section of the transport path (19).

17. A transport device according to any one of claims 12 to 16, **characterized in that** the clamps (12) in each case comprise a plurality of separate clamp parts (13, ..., 16; 21, ..., 27), and the clamp parts (13, ..., 16; 21, ..., 27) are in each case provided with at least one tag (T1, ..., T5; Tn).

18. The transport device according to claim 17, **characterized in that** the tags (T1, ..., T5; Tn) disposed on the clamp parts (13, ..., 16; 21, ..., 27) are able to exchange data with each other.

19. A transport device according to any one of claims 12 to 18, **characterized in that** the tags (T1, ..., T5; Tn) of a clamp (12) store data for customizing or identifying the clamp (12) or the clamp parts (13, ..., 16; 21, ..., 27).

20. The transport device according to claim 19, **characterized in that** the tags (T1, ..., T5; Tn) of a clamp (12) store data about the type and/or production and/or duration of use or useful life of the clamp (12) or clamp parts (13, ..., 16; 21, ..., 27).

21. A transport device according to any one of claims 12 to 20, **characterized in that** the transmission device (34, 36, 38, 40) is part of a processing device, which cooperates with the transport device (10, 20) for processing the transported products (17).

## Revendications

1. Procédé pour la surveillance et/ou la commande d'un dispositif de transport (10, 20), dans lequel une multitude de produits similaires (17), en particulier des produits d'imprimerie tels que des journaux, des magazines ou autres, sont maintenus de façon détachable au moyen de pinces (12) individuelles agencées en rangée les unes derrière les autres, et transportés en série le long d'un trajet de transport (19), dans lequel des étiquettes (T1, ..., T5 ; Tn) susceptibles d'être saisies et/ou lues sans contact sont prévues sur les pinces (12), **caractérisé en ce que**, pour la saisie et/ou la lecture de quantités de données prédéfinies sur les étiquettes (T1, ..., T5 ; Tn) d'une pince (12), un dispositif de saisie/lecture (30) est placé à proximité de la pince respective et déplacé conjointement avec la pince (12) respective sur une partie sélectionnée du trajet de transport (19).

2. Procédé selon la revendication 1, **caractérisé en ce que** les étiquettes utilisées sont des étiquettes (T1, ..., T5 ; Tn) capables d'être saisies/lues par radio, en particulier sous la forme de RFIDs, et **en ce que** le dispositif de saisie/lecture (30) est conçu et/ou déplacé conjointement de manière à ce l'étiquette ou les étiquettes (T1, ..., T5 ; Tn) d'une pince puissent respectivement être saisies ou lues sans être gênées par les pinces voisines.

3. Procédé selon la revendication 1 ou 2, **caractérisé en ce qu'**une voie de déplacement de dispositifs de saisie/lecture et un parcours d'un trajet de transport sur la partie sélectionnée du trajet de transport sont adaptés l'un à l'autre, le dispositif de saisie/lecture (30) étant de préférence déplacé sur une voie de déplacement (35) parallèle conjointement avec la pince (12) respective sur la partie sélectionnée du trajet de transport (19).

4. Procédé selon la revendication 1 ou 2, **caractérisé en ce que** le dispositif de saisie/lecture (30) est déplacé conjointement avec la pince (12) respective sur la partie sélectionnée du trajet de transport (19), sur une voie de déplacement (37) essentiellement en forme d'arc de cercle, par rapport à laquelle le trajet de transport (19) s'étend de façon approximativement tangentielle.

5. Procédé selon l'une des revendications 1 à 5, **caractérisé en ce qu'**il est prévu un nombre limité de dispositifs de saisie/lecture (30), et **en ce que** le nombre limité de dispositifs de saisie/lecture (30) est déplacé sur un circuit fermé, de manière à ce que les étiquettes (T1, ..., T5 ; Tn) de chaque pince (12) puissent être saisies/lues dans la partie sélectionnée du trajet de transport (19).

6. Procédé selon l'une des revendications 1 à 5, **caractérisé en ce que** les pinces (12) comprennent respectivement plusieurs parties de pince (13, ..., 16 ; 21, ..., 27) séparées, **en ce que** les parties de pince (13, ..., 16 ; 21, ..., 27) sont respectivement pourvues d'au moins une étiquette (T1, ..., T5 ; Tn), et **en ce que** plusieurs des étiquettes (T1, ..., T5 ; Tn) agencées sur les parties de pince (13, ..., 16 ; 21, ..., 27) sont saisies ou lues dans la partie sélectionnée du trajet de transport (19).

7. Procédé selon la revendication 6, **caractérisé en ce que** pour la saisie ou la lecture des étiquettes (T1, ..., T5 ; Tn) agencées sur les parties de pince (13, ..., 16 ; 21, ..., 27), une étiquette sélectionnée (T1) est traitée depuis l'extérieur, et **en ce que** les données des autres étiquettes (T2, ..., T5) sont saisies ou lues par le biais de l'étiquettes (T1) sélectionnée.

8. Procédé selon l'une des revendications 1 à 7, **caractérisé en ce que** des données pour l'individualisation ou l'identification d'une pince (12) ou des parties de pince (13, ..., 16 ; 21, ..., 27) sont déposées et/ou lues sur les étiquettes (T1, ..., T5 ; Tn) de la pince (12).

9. Procédé selon la revendication 8, **caractérisé en ce que** des données concernant le type et/ou la fabrication et/ou la durée d'utilisation ou d'usage d'une pince (12) ou des parties de pince (13, ..., 16 ; 21, ..., 27) sont déposées sur les étiquettes (T1, ..., T5 ; Tn) de la pince (12).

10. Procédé selon l'une des revendications 1 à 9, **caractérisé en ce que** les étiquettes (T1, ..., T5 ; Tn) sont utilisées pour surveiller l'état des pinces (12), et **en ce que** lors de la découverte de dysfonctionnements dans les pinces (12) ou de parties de pince (13, ..., 16 ; 21, ..., 27) défectueuses ou incorrectes dans la pince (12), un message correspondant est fourni.

11. Procédé selon l'une des revendications 1 à 10, **caractérisé en ce que** les étiquettes sont utilisées pour surveiller l'état d'ouverture, de fermeture et de remplissage des pinces (12).

12. Dispositif de transport (10, 20) pour l'exécution du procédé selon l'une des revendications 1 à 10, ledit dispositif de transport (10, 20) comprenant une multitude de pinces (12) agencées dans une rangée les unes derrière les autres et déplaçables le long d'un trajet de transport (19) et conçues pour maintenir de façon détachable des produits similaires (17), en particulier des produits d'imprimerie tels que des journaux ou autres, dans lequel des étiquettes (T1, ..., T5 ; Tn) susceptibles d'être saisies et/ou lues sans contact sont disposées sur les pinces (12), et dans lequel il est prévu un dispositif de transmission (34, 36, 38, 40) coopérant avec le dispositif de transport (10, 20) avec au moins un dispositif de saisie/lecture (30), pour la saisie et/ou la lecture de données prédéfinies sur les étiquettes (T1, ..., T5 ; Tn) d'une pince (12), ledit dispositif de saisie/lecture (30) étant placé à proximité de la pince respective au moyen du dispositif de transmission (34, 36, 38, 40) et pouvant être déplacé conjointement avec la pince (12) respective sur la partie sélectionnée du trajet de transport (19).

13. Dispositif de transport selon la revendication 12, **caractérisé en ce que** les étiquettes sont des étiquettes (T1, ..., T5 ; Tn) capables d'être saisies/lues par radio, en particulier sous la forme de RFIDs, et **en ce que** le dispositif de saisie/lecture (30) est conçu et/ou déplacé conjointement avec les pinces (12) de manière à ce l'étiquette ou les étiquettes (T1, ..., T5 ; Tn) d'une pince puissent respectivement être saisies ou lues sans être gênées par les pinces voisines.

14. Dispositif de transport selon la revendication 12 ou 13, **caractérisé en ce qu'**une voie de déplacement de dispositifs de saisie/lecture et un parcours d'un trajet de transport sur la partie sélectionnée du trajet de transport sont adaptés l'un à l'autre, l'au moins un dispositif de saisie/lecture (30) étant de préférence déplacé à l'intérieur du dispositif de transmission (34) sur une voie de déplacement (35) parallèle, conjointement avec la pince (12) respective, sur la partie sélectionnée du trajet de transport (19).

15. Dispositif de transport selon la revendication 12 ou 13, **caractérisé en ce que** l'au moins un dispositif de saisie/lecture (30) est déplacé à l'intérieur du dispositif de transmission (36, 38), conjointement avec la pince (12) respective, sur la partie sélectionnée du trajet de transport (19), sur une voie de déplacement (37) essentiellement en forme d'arc de cercle, par rapport à laquelle le trajet de transport (19) s'étend de façon approximativement tangentielle.

16. Dispositif de transport selon l'une des revendications 12 à 15, **caractérisé en ce que** le dispositif de transmission (34, 36, 38, 40) comprend plusieurs dispositifs de saisie/lecture (30), et **en ce que** les dispositif de saisie/lecture (30) sont déplacés sur un circuit fermé, de manière à ce que les étiquettes (T1, ..., T5 ; Tn) de chaque pince (12) puissent être saisies/lues dans la partie sélectionnée du trajet de transport (19).

17. Dispositif de transport selon l'une des revendications 12 à 16, **caractérisé en ce que** les pinces (12) comprennent respectivement plusieurs parties de pince (13, ..., 16 ; 21, ..., 27) séparées, **en ce que** les parties de pince (13, ..., 16 ; 21, ..., 27) sont respectivement pourvues d'au moins une étiquette (T1, ..., T5 ; Tn).

18. Dispositif de transport selon la revendication 17, **caractérisé en ce que** les étiquettes (T1, ..., T5 ; Tn) disposées sur les parties de pince (13, ..., 16 ; 21, .... 27) peuvent échanger des données entre elles.

19. Dispositif de transport selon l'une des revendications 12 à 18, **caractérisé en ce que** des données pour l'individualisation ou l'identification d'une pince (12) ou des parties de pince (13, ..., 16 ; 21, ..., 27) sont déposées et/ou lues sur les étiquettes (T1, ..., T5 ; Tn) de la pince (12).

20. Dispositif de transport selon la revendication 19, **caractérisé en ce que** des données concernant le type et/ou la fabrication et/ou la durée d'utilisation ou d'usage d'une pince (12) ou des parties de pince (13, ..., 16 ; 21, ..., 27) sont déposées sur les étiquettes (T1, ..., T5 ; Tn) de la pince (12).

21. Dispositif de transport selon l'une des revendications 12 à 20, **caractérisé en ce que** le dispositif de transmission (34, 36, 38, 40) fait partie d'un dispositif de traitement coopérant avec le dispositif de transport (10, 20) pour traiter les produits (17) transportés.
